Europäisches Patentamt

European Patent Office

Office européen des brevets

(11) Publication number: **0 031 389**
A1

# (12) EUROPEAN PATENT APPLICATION

published in accordance with Art. 158(3) EPC

(21) Application number: **80901222.2**

(22) Date of filing: **01.07.80**

Data of the international application taken as a basis:

(86) International application number:
**PCT/JP 80/00154**

(87) International publication number:
**WO 81/00166 (22.01.81 81/2)**

(51) Int. Cl.³: **G 11 B 11/00**, G 11 B 13/00,
G 11 B 15/70

(30) Priority: **02.07.79 JP 83780/79**
**13.09.79 JP 116768/79**
**13.09.79 JP 116766/79**
**13.09.79 JP 116765/79**

(43) Date of publication of application: **08.07.81**
**Bulletin 81/27**

(84) Designated Contracting States: **DE FR GB NL**

(71) Applicant: **TOKYO SHIBAURA DENKI KABUSHIKI
KAISHA, 72, Horikawa-cho Saiwai-ku, Kawasaki-shi
Kanagawa-ken 210 (JP)**

(72) Inventor: **SAWAZAKI, Norikazu Tokyo Shibaura Denki
K.K., Sogo Kenkyusho 1, Toshibacho Komukai Saiwai-ku,
Kawasaki-shi Kanagawa-ken 210 (JP)**

(74) Representative: **Freed, Arthur Woolf et al, MARKS &
CLERK 57-60 Lincoln's Inn Fields, London WC2A 3LS
(GB)**

(54) **DEVICE FOR DRIVING ENDLESS TAPE.**

(57) An endless tape reproducer which reproduces an endless tape on which a signal such as video signal is recorded. An object of the reproducer is to reproduce a recording medium at a high degree of accuracy for an extended period of time by employing a recording medium which can be readily duplicated and which is capable of recording a large quantity of signals. The endless tape (2) is wound on a stationary reel (1), and the portion of the tape at the innermost periphery thereof is introduced into the interior of the reel (1) and wound on the outermost periphery of the tape (2) over the reel (1) through a capstan (4) and a pinch roller (5). The endless tape (2) has a conductive layer, on which a signal is recorded as an irregular pattern. An electrostatic head (7) has an electrode facing the tape (2), and reproduces a signal recorded on the tape (2) due to the variances in the electrostatic capacity between the electrode and the irregular pattern on the tape (2).

- 1 -

S P E C I F I C A T I O N

Endless tape driving apparatus

Technical Field:

This invention relates to an endless tape-reproducing apparatus provided with a mechanism for reproducing signals recorded on a tape.

Background Art:

A tape-reproducing apparatus in general use is provided with a magnetic head for magnetically reproducing signals magnetically recorded on a tape. Where broad hand signals such as video signals are recorded on a large number of magnetic tapes, namely where a large number of copy tapes are duplicated from a master tape, then a long time corresponding to the running time of said copy tape is required each time as in the case where signals are recorded by a magnetic head. Where such magnetic tape is applied for practical purpose, the width and pitch of tracks formed on a tape cannot be considerably narrowed in order to ensure high quality recording and reproduction. Therefore, the drawback experienced in the past in that only about an hour is allowed at most for recording of signals per tape.

In recent years, a video disc system has been developed which comprises recording image signals on a disc in the form of concave and convex patterns and reproducing the image signals mechanically statically or optically. Where such video disc is used as a recording medium, discs can be quickly produced by press in quantities from a master disc as in the ordinary voice recording disc. In this case, however, difficulties arise causing the disc to be rotated in a precisely horizontal plane, resulting in an unnecessary change in a space defined between the disc and scanning head during the rotation of the disc. Where said space thus changes, signals are drawn out in accordance with said changing space, giving rise to the occurrence of noises and failing to produce best output signals. Further, a limitation is imposed on the diameter or area of a usable disc, making it impossible to record and reproduce signals for long. Moreover, as reproduction proceeds toward the inner portion of the disc, the disc is rotated at a higher peripheral speed, leading to the reproduction of output signals unbalanced between the outer and inner portions of the disc, and consequently degrading the quality of reproduced output signals. Further disadvantage of the above-mentioned video disc system is that various mechanisms including that which is used in rotating the disc jointly occupy a large space, rendering the whole tape-driving apparatus balky.

Another tape-driving technique is proposed in the patent publication 17,723/74, which comprises recording signals on a tape in the form of concave and convex patterns, irradiating light beams on said concave and convex patterns, detecting changes in an amount of a light reflected from said patterns or passing therethrough, and thereby reproducing signals. However, this process of reproducing signals by detecting changes in an amount of a light received in accomparied with difficulties in focusing light beams on a tape with high precision, causing reproduced signal to be contaminated by noises. Therefore, this proposed tape-driving technique proves unsuitable for practical application.

It is accordingly the object of this invention to provide an endless tape-reproducing apparatus which resolves difficulties occurring when a magnetic tape or disc is used as a recording medium; ensures quick quantity duplication of tapes; allows for the application of a recording medium on which large quantities of signals can be recorded; and is further provided with a reproduction mechanism which enables signals to be reproduced from the recording medium with high precision over a long period of time.

Disclosure of the Invention:

To attain the above-mentioned object, this invention provides an endless tape-reproducing apparatus which comprises:

an endless tape provided with an electrically conductive layer on which signals are recorded in the form of concave and convex patterns;

means for running the endless tape; and

a static head which is provided with an electrode facing the electrically conductive layer of the running endless tape and reproduces signals according to changes in a static capacity prevailing in a space defined between the electrode and respective signals recorded in the form of concave and convex patterns.

It is possible to impart electric conductivity to the whole endless tape or only those portions of said endless tape on which signals are recorded in the form of concave and convex patterns. Further, it is possible to provide the endless tape-recording apparatus with the known magnetic head and a changeover mechanism which brings a tape selectively to the magnetic head or static head, and causes the tape to be scanned by a prescribed head, thereby allowing for the application of the ordinary magnetic tape.

The endless tape-reproducing apparatus embodying this invention uses a tape on which signals are recorded in the form of concave and convex patterns. Therefore, a tape on which large quantities of signals are recorded can be more saved from the occurrence of noises than in the conventional tape-reproducing device using magnetic signals. A concave-convex pattern type endless tape can be easily duplicated, for example, by hot press. Since an endless tape is used, the arrangement of a tape-driving mechanism can be simplified and a space defined between a head and tape can be readily fixed.

Brief Description of Drawings:

Fig. 1 is a plan view of an endless tape-reproducing apparatus according to one embodiment of this invention;

Fig. 2 is a plan view of part of an endless tape;

Fig. 3 is a schematic oblique view of a cassette of said endless tape;

Fig. 4 is a plan view of an endless tape-reproducing apparatus according to another embodiment of the invention;

Fig. 5 is a plan view of a device for recording signals on an endless tape;

Figs. 6 to 10 illustrate the sequential steps of duplicating an endless tape from a master endless tape; and

Fig. 11 shows a press device for duplicating the endless tape.

Best Mode of Carrying Out the Invention;

Description is now given with reference to the accompanying drawings of an endless tape-reproducing apparatus according to one embodiment of this invention and a method of producing said endless tape.

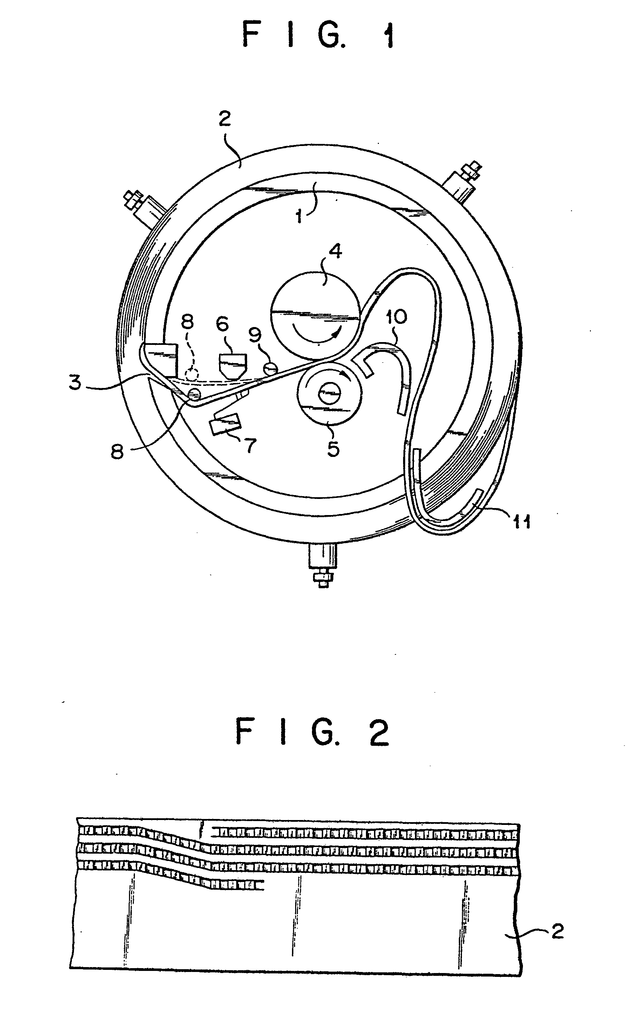

Referring to Fig. 1, reference numeral 1 denotes a stationary reel formed of an annular member securely mounted on a substrate (not shown). An endless tape 2 is wound about the smooth outer peripheral surface of the reel 1. The leading portion of the endless tape 2 is drawn out foward the inner peripheral side of the reel 1 from the innermost part of a roll of the endless tape 2 through a slit 3 extending from the outer peripheral wall to the inner peripheral wall of the reel 1. Later, the leading portion of the endless tape 2 passes over the reel 1 and is wound about the outermost periphery of the roll already wound about the peripheral surface of the reel 1. Provided inside of the stationary annular reel 1 is a tape-driving mechanism consisting of a capstan 4 and pinch roller 5. This tape-driving mechanism causes the leading portion of the endless tape 2 to be conducted from the innermost peripheral wall to the outermost peripheral wall of the roll of the endless tape 2. Spatially set inside of the stationary annular reel 1 are a magnetic head 6 for magnetically recording signals on the endless tape 2 drawn out through the slit 3 and reproducing signals from said endless tape 2 and an electro static head 7 for reproducing signals recorded on the endless tape 2 in the form of the later described concave and convex patterns as changes in the static capacity.

The static head 7 has an electrode disposed at the center. The front side of the electrode is disposed slightly inward from the head surface. Accordingly, signals recorded in the form of concave and convex patterns on the endless tape 2 running in sliding contact with the head surface are always spaced from said electrode. Changes in a static capacity prevailing in a space defined between the respective signals recorded on the endless tape 2 in the form of concave and convex patterns and said electrode are reproduced in the form of output signals. Output signals drawn out by the static head 7 are processed by a circuit for reproducing changes in said static capacity (as set forth in the Japanese patent publication 4414/78). Both magnetic head 6 and static head 7 are of the unrotatable stationary type. Where necessary, however, said magnetic and static heads 6, 7 can be moved intermittently or continuously in a vertical direction, that is, in the direction of the width of the endless tape 2. Therefore, the endless tape 2 cān be scanned inconformity to the tracks formed on said tape 2. Disposed near the magnetic and static heads 6, 7 is a changeover mechanism consisting of a movable guide pole 8 which guides the endless tape 2 selectively to one of said heads 6, 7 to be scanned thereby. A stationary pole 9 is projectively provided between the heads 6, 7 and tape-driving mechanism to guide the endless tape 2 which has passed either of said heads 6, 7 to the tape-driving mechanism. A first guide board 10 is provided inside of the annular reel 1 to control the sagging of the endless tape 2. A second guide board 11 is set above the annular reel 1 to allow for the sagging of the endless tape 2 with drawn from the tape-driving mechanism. The reel 1, endless tape 2 and first and second guide boards 10, 11 may be received in a cartridge and loaded in an endless tape-driving mechanism in the form of a cassette at the time of recording or reproduction.

Where, with an endless tape-driving apparatus arranged as described above, signals are reproduced from an endless tape 2, or recorded thereon by means of the ordinary magnetic head, then the movable guide pole 8 is shifted to the magnetic head 6 to cause the endless tape 2 to be pressed against said magnetic head 6, thereby enabling the tracks of the endless tape 2 to be scanned as indicated in broken lines in Fig. 1, that is, effecting recording of signals on or reproduction of signals from a magnetic endless tape in general use.

Where signals are recorded on an endless tape 2 in the form of concave and convex patterns as illustrated in Fig. 2, then the movable guide pole 8 is shifted to the static head 7 to cause the endless tape 2 to be pressed against said static head 7, thereby causing signals for be reproduced statically from the endless tape 2.

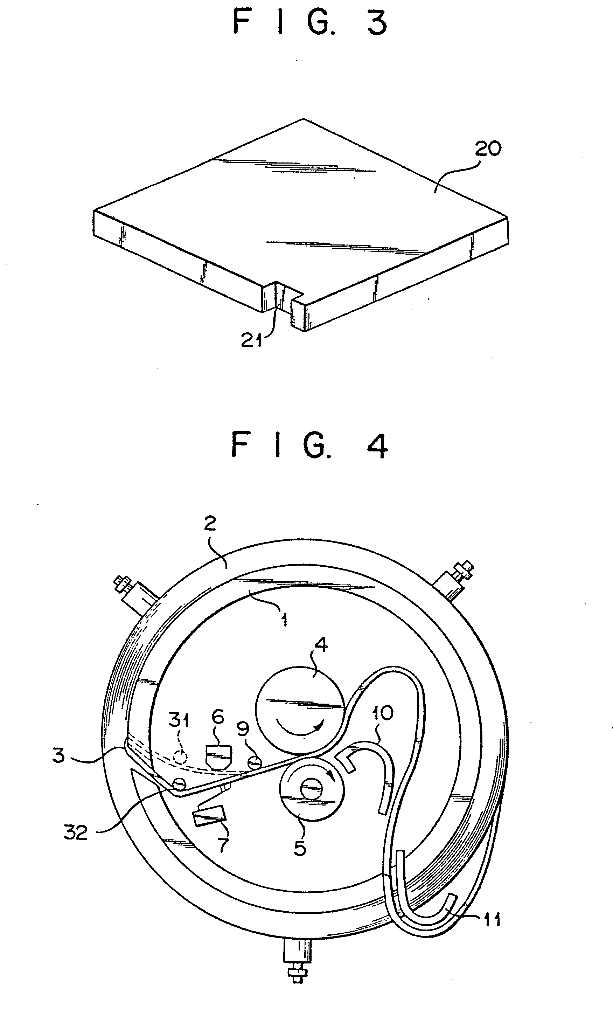

Where the running course of the endless tape 2 is changed by the movable guide pole 8 as described above, then the ordinary electric circuit (not shown) is selectively actuated for use with the magnetic head 6 or static head 7. Where signals are recorded in the form of concave and convex patterns, then a track pitch can be more narrowed than when signals are magnetically recorded. Therefore, in the selective use of either of the magnetic and static heads 6, 7, it offers convenience not only to change the running speed of the endless tape 2, but also the extent to which tracking is controlled by moving either head in the direction of the width of the endless tape 2. Mechanisms and electric circuits used to effect other operations than the above-mentioned selective use of either of the magnetic and static heads 6, 7 can be applied in common to magnetic recording and reproduction and static reproduction. Where the head tracking of an endless tape is controlled, it is advised to mount both magnetic head 6 and static head 7 on the same truck and change the moving speed of said truck in accordance with the magnetic recording and reproduction or the static reproduction. Then, it is possible to use the greater part of an endless tape-driving apparatus in common simply by changing over the operation of only part of said apparatus. The selective operation of the tape-driving system and electric circuitry in conformity to the magnetic type or concave-convex pattern type of an endless tape can be effected by a lever, button or hand. However, it is possible to cut out a notch 21 as shown in Fig. 3 in the periphery of a cartridge holding the magnetic type or concave-convex pattern type of an endless tape, and automatically carry out the selective operation of the tape driving system and electric circuitry in accordance with the presence or absence of said notch 21 when the cartridge 20 is loaded in an endless tape-driving apparatus.

In the above-mentioned embodiment, the running course of the endless tape 2 was changed by shifting the movable guide pole 80. However, it is possible to selectively use either of two reels 1 provided with slits 3 formed in different positions between a cartridge of a magnetic tape and a cartride of a concave-convex pattern type tape, and cause a magnetic tape to travel through a route indicated in broken lines and a concave-convex pattern type tape to run through a route indicated in solid lines. The above-mentioned arrangement eliminates the necessity of providing the movable guide pole 8. In this case, however, it is still preferred to provide stationary guide poles 31, 32 upstream of the respective heads 6, 7, as counted from the running direction of the endless tape 2.

Description is now given of a process of manufacturing the aforesaid concave-convex pattern type endles tape.

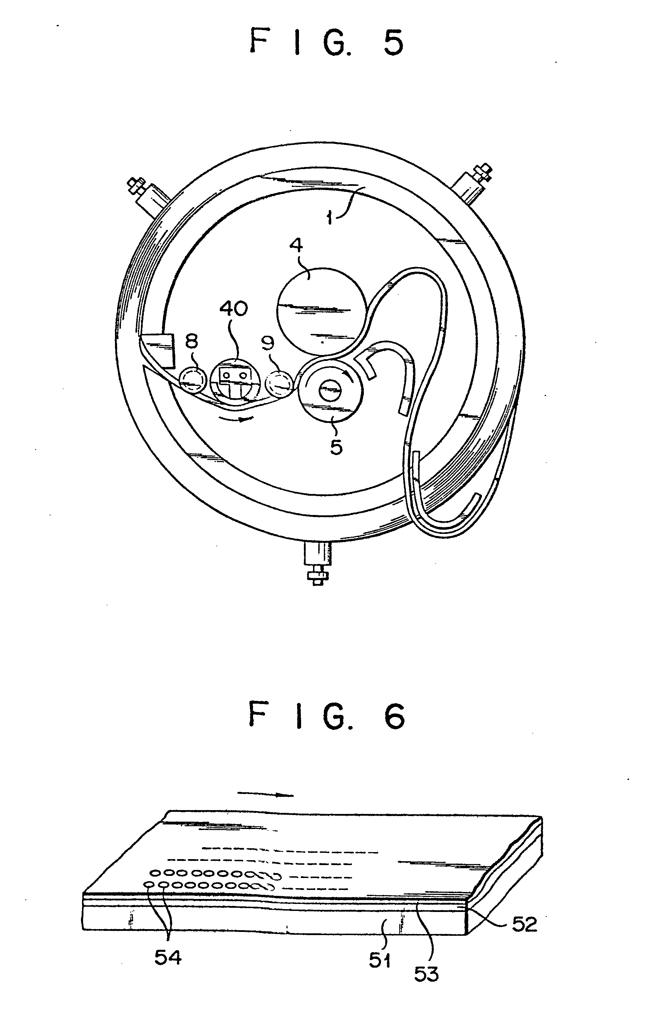

Fig. 5 indicates a device for exposing an endless tape to light beams by applying a prescribed signal in order to record signals on the tape in the form of concave and convex patterns. This device has fundamentally the same arrangement as that of Fig. 1, except for a scanning head and its driving circuit. Therefore, the parts of Fig. 5 the same as those of Fig. 1 are denoted by the same numerals, description thereof being omitted. With the device of Fig. 5, a laser head 40 is used for scanning. A signal obtained by the frequency modulation of a video signal modulates a laser beam, enabling signals to be optically recorded on an endless tape by the same process as applied to the conventional video disc. The endless tape is formed, for example, by thermally depositing a chromium layer on one side of a tape prefered from synthetic resin such as vinyl chloride and coating a photoresist on said chromium layer. While the endless tape is running, the photoresist is exposed to laser beams. Video signals are recorded by the ordinary photoetching technique in the form of concave and convex patterns in the chromium layer of the tape exposed to laser beams. According to the recent laser beam or electron beam working technique, the individual concave and convex patterns are formed with a dimension measured in about submicrons.

An endless tape on which video signals are recorded, as described above, in the form of concave and convex patterns is directly applicable for reproduction. However, it is possible to duplicate a large number of concave-convex pattern type endless tapes from a master endless tape.

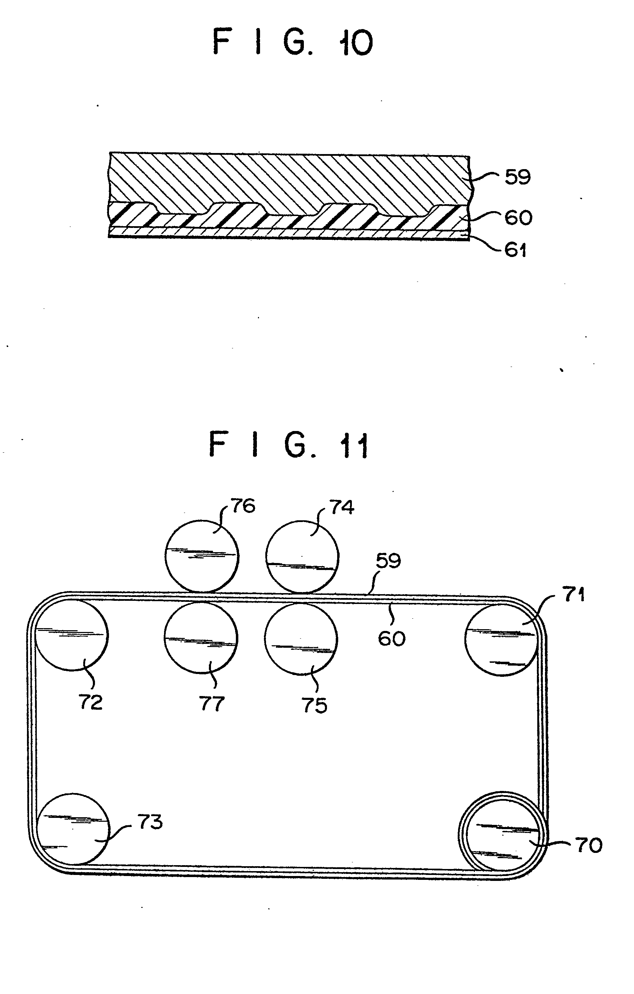

Description is now given with reference to Figs. 6 to 11 of a process of duplicating a concave-convex pattern type endless tape from a master unit.

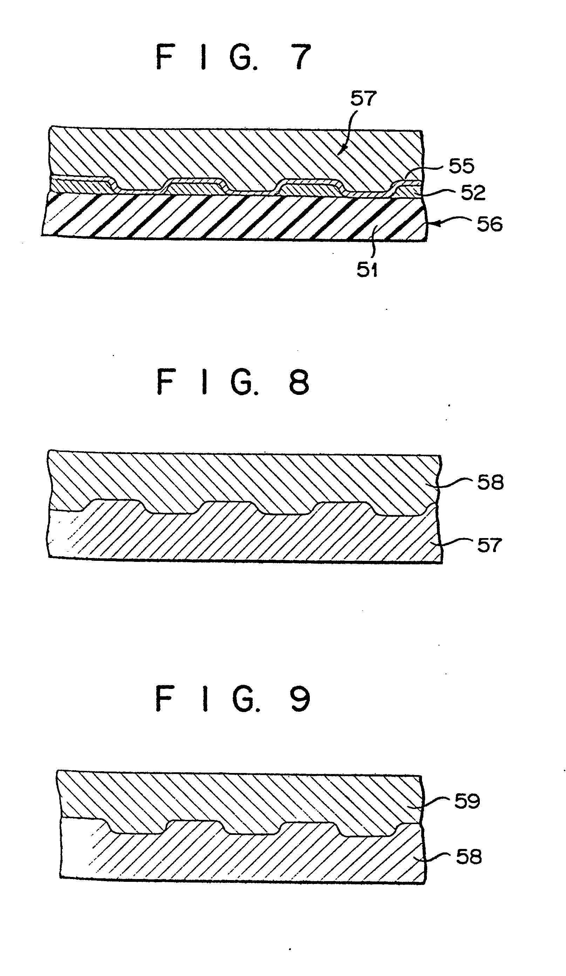

Fig. 6 shows part of an endless tape on which signals are recorded by the recording device of Fig. 5 with a photoresist exposed to laser beams. Referring to Fig. 6 reference numeral 51 denotes a tape base prepared from Mylar (trademark of polyethylene ferephthalate film manufactured by E. I. du Pont de Nemours & Co. Inc. of America) or vinyl chloride. A metal layer 52 formed of, for example, chromium is deposited on said tape base 51. A photoresist layer 53 is mounted on said metal layer 52. Formed in the photoresist layer 53 are a large number of tracks extending lengthwise in parallel at a prescribed pitch as measured crosswise of the photoresist layer 53. Each track comprises one line of a large number of light exposure sections 54 arranged lengthwise of the photoresist layer 53 in the direction of an indicated arrow at an interval corresponding to a space defined between every two adjacent recorded signals. The light exposure sections 54 of the photoresist layer 53 are etched off to provide light exposure parts. A large number of holes are drilled in the metal layer 52 with the photoresist layer 53 used as a mask. As a result, the upper surface of the tape base 51 which faces said metal layer 52 are exposed in a perforated

state. A silver layer 55 is deposited by electroless plating on the exposed portions and metal layer 52. As a result, an endless tape 56 is produced, in which concave and convex patterns are formed on the surface of the plated silver layer 55. A nickel layer is deposited on the plated silver layer 55 with a thickness of about 0.1 to 0.5 mm to provide a primary master tape 57 as shown in Fig. 7. The primary master tape 57 thus formed is taken off the endless tape 56. A nicked layer is plated by electroplating on the surface of the master tape 57 on which concave and convex patterns are formed, thereby providing a secondary master tape 58 as indicated in Fig. 8. A nickel layer is plated by electroplating on the surface of the secondary master tape 58 on which concave and convex patterns are formed, thereby providing a tertiary master tape 59, thus providing a metal mold tape for pressing an endless tape used for reproduction of signals. An endless tape 60 on which signals are to be recorded is hot pressed by the tertiary master tape 59, thereby duplicating an endless tape for reproduction of signals, on the surface of which concave and convex patterns are formed in conformity to recorded data. The endless tape 60 on which signals are to be recorded may be prepared from a synthetic resin containing a conductive material to be rendered conductive in whole. Or only the surface of the endless tape 60 on which concave and convex patterns are to be formed may be rendered conductive by depositing a conductive material such as metal on the surface of an electrically insulating material such as a synthetic resin.

With the above-mentioned endless tape 60, it is preferred to cost the backside of said endless tape 60 with, for example, Mylar (trademark of polyethylene ferephthalate film manufactured by E. I. du Pant de Nemours & Co. Inc. of America) as a reinforcing layer 61 in order to increase the tensile strength of the endless tape 60. Instead, it is possible to let powder of, for example, Mylar be mixed with the endless tape 60.

Description is now given with reference to Fig. 11 of the process of duplicating from the tertiary master tape 59 an endless tape 60 in which signals are to be recorded in the form of, for example, concave and convex patterns. As shown in Fig. 11, the tertiary master tape 59 and endless tape 60 on which signals are to be recorded are superposed on each other. The superposed tape mass is wound about a standard pole 70. The leading portion of the superposed tape mass is drawn out from the lowermost part of a roll of said wound superposed tape mass, conducted over three guide poles 71, 72, 73, and taken up again on the standard pole 70 to be successively set on the uppermost part of a roll of superposed tape mass already wound about said standard pole 70. Provided between the guide poles 71, 72 are a press mechanism consisting of a heating roller 74 and its driven roller 75, and a cooling mechanism consisting of a cooling roller 76 and its driven roller 77. This roller assembly causes the concave and convex patterns formed on the surface of the tertiary master tape 59 to be successively transcribed by hot press on the surface of a tape 60, on which data is to be recorded, thereby duplicating an endless tape on which signals are recorded in the form of concave and convex patterns.

Where a large number of endless tapes are duplicated, it is advised to take the steps of arranging many groups of the aforesaid hot press mechanisms and cooling mechanisms in the vertical direction; setting many rolls each consisting of a superposed mass of the tertiary master tape 59 and a tape 60 on which signals are to be recorded on the peripheral surface of the standard pole 70 similarly in the vertical direction; and conducting the superposed tape masses of the respective rolls to the corresponding groups of hot press mechanisms and cooling mechanisms. Or it is possible to

- 12 -

0031389

record many groups of signals having the same contents repeatedly on a long tertiary master tape, cut up said tertiary master tape for each group of signals, and duplicating a large number of endless tapes from the cut-up pieces of said long tertiary master tape.

The specification of a typically designed apparatus embodying this invention for driving a concave-convex pattern type endless tape and the specification of a typically designed conventional apparatus for driving a magnetic endless tape are indicated for comparison in the following table.

|  | This invention | Conventional apparatus |
|---|---|---|
| Tape width | 1/2 inch(12.7 mm) | Same |
| Tape speed | 6 m/sec | Same |
| Track width | 5 microns | 50 microns |
| Tape length | 20 meters | 100 meters |
| Track number | 2200 | 220 |
| Recording time | 2 hours | 1 hour |

As seen from the table above, an endless tape-driving apparatus embodying this invention enables signals to be recorded on a concave-convex pattern on an endless tape with the track width reduced to about one-tenth of that of a magnetic endless tape used with the conventional apparatus, and signals to be reproduced from such narrowed tracks. Therefore, the present invention can record signals in an amount twice larger than is possible with the prior art apparatus on a concave-convex pattern type endless tape even if its length is reduced to one-fourth of a magnetic endless tape.

As described above, en endless tape-driving apparatus embodying this invention can reproduce signals under good condition from a concave-convex pattern type endless tape on which a large amount of signals are recorded. Further, the invention makes it possible to easily duplicate a large number of endless tapes from a master tape. A space defined between the endless tape and head can obviously be fixed by applying, for example, the known magnetic tape guide. With the endless tape-driving apparatus of the invention therefore, noises are little likely to result from variations in the running speed of an endless tape. The recording medium-driving mechanism of the invention which does not use a disc is simplified as much as in the case of a magnetic tape, thereby rendering the endless tape-driving apparatus of the invention considerably compact.

Industial Applicability:

The present invention can duplicate a large number of endless tapes on which video signals are recorded similar to magnetic tapes now on the market on which video signals are recorded and allow for a wide circulation of said duplicated tapes as commercial articles, enabling the user to easily reproduce signals from such tape. Therefore, a concave-convex pattern type endless tape embodying this invention is widely applicable, for example, in the fields of dissemination of information, enjoyment of leisure and inculcation of culture.

Claims:

1. An endless tape-reproducing apparatus comprising an endless tape on which signals are recorded, means for driving said endless tape, and reprodution head for scanning a running endless tape to reproduce signals therefrom; characterized in that the endless tape is provided with an electrically conductive layer; signals are recorded on said electrically conductive layer in the form of concave and convex patterns; and the reproduction head has an electrode spatially facing the electrically conductive layer of the endless tape, and is of the static type which reproduces signals from changes in a static capacity prevailing in a space defined between the electrode and the respective signals recorded in the form of concave and convex patterns.

2. The endless tape-reproducing apparatus according to claim 1, which is characterized in that the endless tape is formed of a base member prepard from synthetic resin and an electrically conductive layer mounted on the surface of said base member.

3. The endless tape-reproducing apparatus according to claim 1, which is characterized in that the endless tape is wholly prepared from synthetic resin mixed with electrically conductive powder.

4. The endless tape-reproducing apparatus according to claim 1, 2 or 3 which is characterised in that said apparatus further comprises a changeover mechanism for selectively operating the magnetic head or static head.

5. The endless tape-reproducing apparatus according to claim 4, which is characterized in that the endless tape is a video tape wound about the outer peripheral surface of a stationary annular reel provided with a slit; a pair of guide poles, the static head disposed between said guide poles and tape-driving means are set inside of the stationary annular reel; and the tape-driving mechanism drives the endless tape such that the leading portion of the endless tape is conducted from the inner most part of a roll of the endless tape wound about the outer peripheral surface of the stationary annular reel through the slit into the interior of said reel and then passes over said reel to be wound again on the outermost part of a roll already wound about said reel.

1

# F I G. 1

# F I G. 2

2

# F I G. 3

20

21

# F I G. 4

2

1

4

31 6 9 10

3

32

7 5

11

# F I G. 5

# F I G. 6

# F I G. 7

57
55
52
56
51

# F I G. 8

58
57

# F I G. 9

59
58

F I G. 10

F I G. 11

# INTERNATIONAL SEARCH REPORT

International Application No PCT/JP80/00154

**I. CLASSIFICATION OF SUBJECT MATTER** (if several classification symbols apply, indicate all)

According to International Patent Classification (IPC) or to both National Classification and IPC

Int. Cl.$^3$ G11B11/00, G11B13/00, G11B15/70

**II. FIELDS SEARCHED**

| Minimum Documentation Searched [4] | |
|---|---|
| Classification System | Classification Symbols |
| I P C | G11B9/06, G11B11/00, G11B13/00, G11B13/02, G11B15/70 |

Documentation Searched other than Minimum Documentation
to the Extent that such Documents are Included in the Fields Searched [5]

| | | |
|---|---|---|
| Jitsuyo Shinan Koho | 1955 | - 1980 |
| Kokai Jitsuyo Shinan Koho | 1971 | - 1980 |

**III. DOCUMENTS CONSIDERED TO BE RELEVANT [14]**

| Category [*] | Citation of Document, [16] with indication, where appropriate, of the relevant passages [17] | Relevant to Claim No. [18] |
|---|---|---|
| X | JP,A, 54-70006,     1979-6-5<br>TOSHIBA CORPORATION | 1 - 5 |
| X | JP,A, 47-37415,     1972-12-1<br>See page 3, lower right column, line 12 to page 5, lower right column, line 2<br>R.C.A. Corporation | 1 - 5 |
| X | JP,A, 50-67630,     1975-6-6<br>Matsushita Electric Industrial Co., Ltd. | 3 |
| X | JP,A, 49-114411,     1974-10-31<br>See page 2, upper right column, line 18 to page 3, upper right column, line 5<br>SONY CORPORATION | 3 |
| A | JP,Y1, 39-27225,     1964-9-15<br>Zaidan Hojin Mochizuki Denpa Kenkyusho | 4 |
| A | JP,A, 49-62115,     1974-6-17<br>Copal Co., Ltd. | 4 |

\* Special categories of cited documents: [15]

"A" document defining the general state of the art

"E" earlier document but published on or after the international filing date

"L" document cited for special reason other than those referred to in the other categories

"O" document referring to an oral disclosure, use, exhibition or other means

"P" document published prior to the international filing date but on or after the priority date claimed

"T" later document published on or after the international filing date or priority date and not in conflict with the application, but cited to understand the principle or theory underlying the invention

"X" document of particular relevance

**IV. CERTIFICATION**

| Date of the Actual Completion of the International Search [2] | Date of Mailing of this International Search Report [2] |
|---|---|
| September 29, 1980 (29.09.80) | October 6, 1980 (06.10.80) |
| International Searching Authority [1] | Signature of Authorized Officer [20] |
| Japanese Patent Office | |